## Europäisches Patentamt

## European Patent Office

## Office européen des brevets

(19)

(11) Veröffentlichungsnummer: **0 050 732**
**B1**

(12) **EUROPÄISCHE PATENTSCHRIFT**

(45) Veröffentlichungstag der Patentschrift:
**27.03.85**

(51) Int. Cl.⁴: **H 04 M 11/04**

(21) Anmeldenummer: **81107388.1**

(22) Anmeldetag: **18.09.81**

(54) Wähleinrichtung mit Rufnummern- bzw. Kennungsspeicher.

(30) Priorität: **23.10.80 DE 3039981**

(43) Veröffentlichungstag der Anmeldung:
**05.05.82 Patentblatt 82/18**

(45) Bekanntmachung des Hinweises auf die Patenterteilung:
**27.03.85 Patentblatt 85/13**

(84) Benannte Vertragsstaaten:
**AT BE CH FR GB IT LI LU NL SE**

(56) Entgegenhaltungen:
**DE - A - 2 139 629**
**DE - A - 2 824 169**
**FR - A - 2 452 833**
**JP - A - 53 117 305**
**US - A - 3 516 598**
**US - A - 3 585 304**
**US - A - 4 219 698**

**ELECTRONICS INTERNATIONAL, Band 50, Nr. 19,
September 1977 B. CAYTON "Designing with nitride
type EAROMS"**

(73) Patentinhaber: **ANT Nachrichtentechnik GmbH,
Gerberstrasse 33, D-7150 Backnang (DE)**

(72) Erfinder: **Ostermann, Bernd, Dipl.-Ing., Ginsterhalde 8,
D-7153 Weissach i.T. (DE)**
Erfinder: **Lissner, Paul, Ing. grad., Ludwigsburger
Strasse 8, D-7150 Backnang (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

**Beschreibung**

Die Erfindung betrifft eine Wähleinrichtung mit Rufnummern- und Kennungsspeicher gemäß Oberbegriff des Patentanspruchs 1.

Eine Wähleinrichtung zum selbsttätigen Anwählen eines Fernsprechteilnehmeranschlusses ist bekanntgeworden durch die Offenlegungsschrift DE-OS 2 422 545, bei der mittels Einstellschalter die Ziffernfolge der zu wählenden Nummer am Speicher einstellbar ist. Nachteilig ist hierbei, daß die Einstellschalter ein relativ großes Volumen benötigen und, sofern keine Maßnahmen gegen unbefugtes Betätigen getroffen sind, in unzulässiger Weise verstellt werden können.

Durch die DE-OS 2 842 776 ist eine Wähleinrichtung für den automatischen Aufbau von Datenverbindungen zwischen Stationen über ein Wählnetz bekanntgeworden, die einen Rufnummernspeicher aufweist, in den eine Rufnummer sowie eine zugehörige Kennung einspeicherbar sind. Das Einspeichern erfolgt hierbei durch Steckverbinden von Leitungen mittels Stecker.

Hier gilt ebenfalls das oben Gesagte.

Weiterhin gibt es Fernwirksysteme und Notrufeinrichtungen, die ebenfalls mit Wähleinrichtungen der obigen Art arbeiten und deren Rufnummernspeicher als Kern-, Halbleiter- und andere Speicher ausgeführt sind, die elektronisch programmierbar sind.

Nachteilig ist bei allen bekannten Wähleinrichtungen, daß bei Neueinrichtungen von Stationen ein entsprechend programmierter Speicher eingesetzt oder der Speicher an Ort und Stelle programmiert werden muß. Dieselben Maßnahmen sind zu ergreifen, wenn bei Einsatz von flüchtigen, gepufferten Speichern Störungen an der Stromversorgung auftreten. Bei genereller Rufnummernänderung müssen sogar in allen Stationen die Speicher ausgewechselt oder umprogrammiert werden. Diese Maßnahmen erfordern einen hohen Personal- und Zeitaufwand.

Der Erfindung lag daher die Aufgabe zugrunde, eine Wähleinrichtung der eingangs genannten Art anzugeben, die es erlaubt, bei der Einrichtung von Notrufstationen oder bei der Änderung von Rufnummern bzw. Kennungen mit wesentlich weniger Personal-, Schaltungs- und Zeitaufwand auszukommen, wobei nach erfolgter Einspeicherung die eingespeicherten Daten auf Richtigkeit überprüft werden.

Die Aufgabe wird durch eine Wähleinrichtung mit den kennzeichnenden Merkmalen gemäß Patentanspruch 1 gelöst.

Durch die US-PS 3 510 598 ist ein Telefonanruf-Weiterleit- und Alarmsystem bekanntgeworden, das über Sendeapparate verfügt, die im Alarmfall automatisch eine in einem Magnetspeicher gespeicherte Telefonnummer anwählen und über das Wählnetz vom überwachten zum überwachenden Ort eine Nachricht absetzen. Diese Nachricht besteht aus einem Tonfrequenzsignal oder zusätzlich aus einer Information, die ebenfalls im Magnetspeicher abgespeichert ist. Eine Sprechverbindung zwischen den Teilnehmern ist jedoch nach dem Absetzen der Nachricht nicht vorgesehen. Eine Änderung der Rufnummer, die in dem Magnetspeicher eingespeichert ist, durch den Teilnehmerstelleninhaber aus der Ferne ist möglich, indem er seine eigene Telefonnummer anwählt und nach Aufbau der Verbindung und der Antwort seiner Teilnehmerstelleneinrichtung mittels eines tragbaren Tonfrequenzgenerators Tonfrequenzen an seine Teilnehmerstelleneinrichtung sendet, welche in dem Magnetspeicher abgespeichert werden und damit die alte Telefonnummer überschreiben. Eine solche Änderung ist umständlich und aufwendig.

Bei der Einrichtung, bei der Änderung oder beim Ausbau von Notrufsystemen mit den erfindungsgemäßen automatischen Wähleinrichtungen ergeben sich die Vorteile, daß der Aufwand an technischem Fachpersonal, der Schaltungs- und der Zeitaufwand stark reduziert werden. Solche Notrufsysteme sind benutzer- und servicefreundlicher und bieten außerdem weniger Manipulationsmöglichkeiten. Nach erfolgter Einspeicherung wird auf unaufwendige Weise geprüft, ob die eingespeicherten Daten richtig sind.

Optimale Ausgestaltungen der Erfindung stellen die Unteransprüche dar.

Es folgt nun die Beschreibung der Erfindung anhand eines Ausführungsbeispiels für ein Notrufsystem.

Bei der Inbetriebnahme einer weiteren Notruf-Teilnehmerstation ist der Rufnummern- bzw. Kennungsspeicher der automatischen Wähleinrichtung zunächst leer. Die Station kann somit ihre Funktion noch nicht ausüben und ist beim Einschalten, beispielsweise aufgrund des Ergebnisses einer Plausibilitätsprüfung, gesperrt. Mit Hilfe des Telefons wird nunmehr die Rufnummer der Zentrale gewählt und nach Aufbau der Verbindung fernmündlich die Neueinrichtung der Teilnehmerstation angemeldet. Anschließend erfolgt zweckmäßigerweise eine Kontrolle der Kartei- bzw. Bildschirmdaten der Station in der Notrufzentrale. Nach Betätigung der Notruftaste wird die Teilnehmeranschlußleitung vom Telefonapparat auf die Teilnehmerstation umgeschaltet. Von der Zentrale aus erfolgen nun die Übertragung der Rufnummer der zu wählenden Station bzw. der Kennung der rufenden Station und die Einspeicherung der übertragenen Information in den Speicher der Wähleinrichtung. Für die Übertragung der Speicherinformation kann ein übliches Fernwirktelegrammformat verwendet werden. Nach erfolgter Einspeicherung ist die Teilnehmerstation voll funktionsfähig, und es kann die gegebenenfalls eingebaute Wechselsprecheinrichtung zur Kommunikation mit der Zentrale benutzt werden. Mit Hilfe einer Auslöseprozedur wird von der zentralen Station die Verbindung ausgelöst. Daran anschließend erfolgt vorteilhafterweise durch erneute Betätigung der Notruftaste eine Aktivierung der Teilnehmerstation, die nunmehr automatisch die programmierte Rufnummer wählt und nach Aufbau der Nachrichtenverbindung mit der anzuwählenden Station (Notrufzentrale, deren Rufnummer nicht unbedingt mit derjenigen der Einrichtezentrale übereinzustimmen braucht) ein die Station- und Teilnehmerkennung einschließendes Notruftelegramm abgesetzt wird. Dabei ergibt sich die Möglichkeit einer zentralen Überprüfung der Funktion der Teilnehmerstation und ihrer zentral abgespeicherten Datensätze. Die Inbetriebnahme wird anschließend zentral protokolliert.

Bei Ortsnetzumstellungen, bei Erweiterung der zentralen Anschlußleitungen (zur Erhöhung der Erreichbarkeit) usw. muß die eingespeicherte Rufnummer in der teilnehmerseitigen Wähleinrichtung geändert werden. Hierzu ist die Zentrale für eine Übergangszeit sowohl auf der alten als auch auf der neuen Rufnummer zu erreichen. Vorteilhafterweise werden bei in dieser Zeit ankommenden Notrufen vor Auslösung der Notrufverbindung erfindungsgemäß entweder automatisch oder mittels zentraler Bedienungsperson die Rufnummern bzw. Kennungsspeicher geändert. Zur Kontrolle der richtigen Funktionsweise werden die Notrufteilnehmer anschließend gebeten, nochmals einen Notprüfruf auszulösen.

Diejenigen Teilnehmerstationen, die sich nicht mittels Notruf bei der Zentrale melden, werden von letzterer über Telefon aufgefordert, zur Änderung der Speicher ihre Notruftaste zu betätigen.

Werden für die Rufnummern- bzw. Kennungsspeicher kurzzeitgepufferte Direktzugriffspeicher (RAM) verwendet, so ist eine ständige Plausibilitätskontrolle des Speicherinhalts erforderlich, da sich nach einem Spannungsausfall der Inhalt des Speichers geändert haben kann. Ein negatives Ergebnis dieser Plausibilitätskontrolle wird dem Teilnehmer als Störung angezeigt, worauf er die Zentrale anzurufen hat.

In einer Weiterbildung der Erfindung werden vorteilhafterweise für die Rufnummern- bzw. Kennungsspeicher nicht flüchtige, jedoch elektrisch änderbare Speicher (EAROM) eingesetzt.

In einer Weiterbildung der Erfindung wird die Verbindung zwischen Teilnehmerstation und zentraler Station zum Zwecke der Einspeicherung oder Änderung von Rufnummer bzw. Kennung der Wähleinrichtung in der Teilnehmerstation von der zentralen Station aus aufgebaut. In der Teilnehmerstation ist hierbei ein Rufempfänger vorgesehen, der nach der Art eines Anrufbeantworters bei Nichtabheben des Telefonapparates innerhalb von einigen Sekunden selbsttätig auf die Notrufstation umschaltet und bei Empfang eines entsprechenden Kriteriums, das beispielsweise ein Kennton sein kann, die Einspeicherung bzw. Änderung des Speichers der Wähleinrichtung von der Seite der Zentrale ermöglicht. Bei Nichtvorhandensein des Kriteriums wird nach einiger Zeit selbsttätig die Leitung aufgetrennt. Dieses Verfahren erlaubt auch eine zyklische Überprüfung der Teilnehmerstation auf Funktionstüchtigkeit von der Zentrale aus. Diese Weiterbildung der Erfindung ermöglicht damit eine noch größere Benutzerfreundlichkeit bei gleichzeitiger Verhinderung von Fremdmanipulation.

**Patentansprüche**

1. Wähleinrichtung mit Rufnummern- und Kennungsspeicher, in welchen die Rufnummer der anzuwählenden bzw. die Kennung der rufenden Station einspeicherbar sind, für den automatischen Aufbau von Nachrichtenverbindungen zwischen Stationen, die über Teilnehmeranschlußleitungen teilnehmergleich an ein Wählnetz angeschlossen sind, für Notrufsysteme, bei denen der Notruf durch einen Sensor oder durch eine Notruftaste erzeugt wird und nach Austausch von Notruf- und Quittiertelegrammen zwischen Notruf- und zentraler Station eine Sprechverbindung aufbaubar ist, wobei nach Aufbau einer Verbindung zwischen einer Notrufstation und der zentralen Station die Einspeicherung von Rufnummer und/oder Kennung in den leeren oder zu ändernden Speicher dieser Station durch die zentrale Station erfolgt, dadurch gekennzeichnet, daß die Notrufstation über ein Fernsprech- oder Fernschreibgerät verfügt, die zum Aufbau der Verbindung benutzt wird, daß nach Aufbau der Verbindung die Teilnehmeranschlußleitung an die Wähleinrichtung angeschaltet wird, daß anschließend die Einspeicherung erfolgt und daß nach erfolgter Einspeicherung die Verbindung ausgelöst und die Wähleinrichtung zum Aufbau einer Prüfverbindung angelassen wird.

2. Wähleinrichtung nach Anspruch 1, dadurch gekennzeichnet, daß die Anschaltung durch den Teilnehmer erfolgt.

3. Wähleinrichtung nach Anspruch 1, dadurch gekennzeichnet, daß die Anschaltung nach Übertragung einer weiteren Kennung von der Zentrale aus erfolgt.

4. Wähleinrichtung nach den Ansprüchen 1 bis 3, dadurch gekennzeichnet, daß der Aufbau der Verbindung durch Anwahl der zentralen Station mittels einer zweiten Wähleinrichtung, die durch den Teilnehmer bei der Notrufstation betätigt wird, erfolgt.

5. Wähleinrichtung nach Anspruch 4, dadurch gekennzeichnet, daß die zweite Wähleinrichtung eine Wähleinrichtung ist, in deren Rufnummern- und Kennungsspeicher die Rufnummer der zentralen Station und eine Neueinrichtung oder Änderung kennzeichnende Kennung eingespeichert sind.

6. Wähleinrichtung nach einem der vorhergehenden Ansprüche, dadurch gekennzeichnet, daß die Einspeicherung durch Übertragung von Tonfrequenz-Multiplex-Signalen erfolgt.

7. Wähleinrichtung nach einem der vorhergehenden Ansprüche, dadurch gekennzeichnet, daß der Speicherinhalt einer Plausibilitätskontrolle unterzogen wird und daß bei Fehlern eine Anzeige erfolgt.

8. Wähleinrichtung nach einem der vorhergehenden Ansprüche, gekennzeichnet durch die Verwendung eines nichtflüchtigen Speichers für Rufnummern- und Kennungsspeicher.

9. Wähleinrichtung nach einem der vorhergehenden Ansprüche, dadurch gekennzeichnet, daß der Aufbau der Verbindung von der zentralen Station aus erfolgt.

10. Wähleinrichtung nach Anspruch 9, dadurch gekennzeichnet, daß ein Rufempfänger vorgesehen ist, durch den die Anschaltung der Teilnehmerleitung an die Wähleinrichtung erfolgt, und daß bei Empfang eines Kenntons die Einspeicherung oder Änderung der Speicher erfolgt.

**Claims**

1. Selector equipment with a call number and identification stores, in which the call number of the station to be selected or the identification of the calling station are storable, for the automatic build-up of communications connections between stations, which connected as equal subscribers through subscriber connection lines to a selector network, for emergency call systems, in which the emergency call is generated through a sensor or through an emergency call key and a speech connection is capable of being built up after exchange of emergency call and acknowledgement telegrams between emergency call station and central station and wherein the storing of call number and/or identification into the empty store, or that to be changed, of this station takes place through the central station after the build-up of a connection between an emergency call station and the central station, characterised thereby, that the emergency call station is provided with a telephone or teleprinter instrument which is utilised for the build-up of the connection, that the subscriber connection line is connected to the selector equipment after the build-up of the connection, that the storing takes place subsequently and that the connection is freed and the selector equipment is started for the build-up of a test connection after storage has taken place.

2. Selector equipment according to claim 1, characterised thereby, that the switching-on takes place through the subscriber.

3. Selector equipment according to claim 1, characterised thereby, that the switching-on takes place from the exchange after transmission of a further identification.

4. Selector equipment according to the claims 1 to 3, characterised thereby, that the build-up of the connection takes place through selection of the central station by means of a second selector equipment which is actuated by the subscriber at the emergency call station.

5. Selector equipment according to claim 4, characterised thereby, that the second selector equipment is a selector equipment, in the call number and identification stores of which the call number of the central station and an identification characterising new equipment or change are stored.

6. Selector equipment according to one of the preceding claims, characterised thereby, that the storing takes place through the transmission of tone frequency multiplex signals.

7. Selector equipment according to one of the preceding claims, characterised thereby, that the storage content is subjected to a plausibility check and an indication takes place in case of errors.

8. Selector equipment according to one of the preceding claims, characterised by the use of a non-volatile store for call number and identification stores.

9. Selector equipment according to one of the preceding claims, characterised thereby, that the build-up of the connection takes place from the central station.

10. Selector equipment according to claim 9, characterised thereby, that a call receiver is provided, through which the switching of the subscriber line onto the selector equipment takes place and that the storing into or change of the stores takes place on reception of an identification tone.

**Revendications**

1. Composeur à mémoire de numéro d'appel et d'indicatif, permettant de mémoriser le numéro d'appel du poste demandé et l'indicatif du poste demandeur pour l'établissement automatique de liaisons de message entre des postes reliés par des lignes d'abonné à un réseau automatique, dans un système d'appel de secours dans lequel l'appel de secours est délivré par un capteur ou par une touche d'appel de secours et une liaison téléphonique peut être établie après l'échange de télégrammes d'appel de secours et d'accusé de réception entre le poste d'appel de secours et le central, le numéro d'appel et/ou l'indicatif étant stockés par le central dans la mémoire vide ou à modifier d'un poste d'appel de secours, après l'établissement d'une liaison entre ce poste et le central, ledit composeur étant caractérisé en ce que le poste d'appel de secours dispose d'un appareil téléphonique ou télégraphique servant à l'établissement de la liaison; la ligne d'abonné est connectée au composeur après l'établissement de la liaison; la mémorisation est ensuite effectuée; et après la mémorisation, la liaison est libérée et le composeur mis en service pour l'établissement d'une liaison de contrôle.

2. Composeur selon revendication 1, caractérisé en ce que la connexion est assurée par l'abonné.

3. Composeur selon revendication 1, caractérisé en ce que la connexion est effectuée par le central après la transmission d'un indicatif supplémentaire.

4. Composeur selon revendications 1 à 3, caractérisé en ce que la liaison est établie par appel du central à l'aide d'un second composeur, actionné par l'abonné sur le poste d'appel de secours.

5. Composeur selon revendication 4, caractérisé en ce que le second composeur est un composeur dont la mémoire contient le numéro d'appel du central et un indicatif caractérisant une installation ou une modification.

6. Composeur selon une quelconque des revendications 1 à 5, caractérisé en ce que la mémorisation s'effectue par transmission de signaux multiplexés à fréquence acoustique.

7. Composeur selon une quelconque des revendications 1 à 6, caractérisé en ce que le contenu de la mémoire est soumis à un contrôle de plausibilité; et une indication est produite en cas de défaut.

8. Composeur selon une quelconque des revendications 1 à 7, caractérisé par l'emploi d'une mémoire non volatile comme mémoire de numéro d'appel et d'indicatif.

9. Composeur selon une quelconque des revendications 1 à 8, caractérisé en ce que la liaison est établie depuis le central.

10. Composeur selon revendication 9, caractérisé en ce qu'un récepteur d'appel est prévu, qui connecte la ligne d'abonné au composeur; et la mémorisation ou la modification des mémoires s'effectue lors de la réception d'une tonalité indicatif.